# EUROPÄISCHE PATENTANMELDUNG

(11) **EP 2 523 224 A2**
(43) Veröffentlichungstag der Anmeldung: **14.11.2012**
(21) Anmeldenummer: 12165981.7
(22) Anmeldetag: 27.04.2012
(51) Int. Cl.: H01L 31/042, F24J 2/52

(54) **Klemmhalter und Klemmhaltersystem zur Montage eines Tragprofils für Photovoltaikmodule auf einem Dach**

(30) Priorität: 09.05.2011 DE 102011101186
(71) Anmelder: Creotecc GmbH, 79111 Freiburg (DE)
(72) Erfinder: Bartmann, Ulrich, 76661 Philippsburg (DE)
(74) Vertreter: Witte, Weller & Partner

(57) **Zusammenfassung**

Es wird offenbart ein Klemmhalter (10) für ein schienenartiges Tragprofil (62), das eine ebene Unterseite (64) mit einer Breite (B2) aufweist und an welchem ein PV-Modul (74) auf einem Dach (61) befestigt wird, weist auf: ein Basiselement (14) mit einer Oberseite (34) und einer Unterseite (36); einen ersten Klemmschenkel (16-1), der einen ersten Anschlagsabschnitt (28-1) und einen ersten überhängenden Halteabschnitt (30-1) aufweist, wobei der erste Anschlagsabschnitt (28-1) und der erste Halteabschnitt (30-1) eine erste Klemmnut (18-1) definieren, die einem ersten Schattenraum (42-1) unterhalb des ersten überhängenden Halteabschnitts (30-1) entspricht, wobei der erste Anschlagsabschnitt (28-1), vorzugsweise senkrecht, aus der Oberseite (34) des Basiselements (14) vorsteht und wobei der erste Halteabschnitt (30-1) parallel zur Oberseite (34) des Basiselements (14) orientiert ist; einen zweiten Klemmschenkel (16-2), der einen zweiten Anschlagsabschnitt (28-2) und einen zweiten überhängenden Halteabschnitt (30-2) aufweist, wobei der zweite Anschlagsabschnitt (28-2) und der zweite Halteabschnitt (30-2) eine zweite Klemmnut (18-2) definieren, die einem zweiten Schattenraum (42-2) unterhalb des zweiten überhängenden Halteabschnitts (30-2) entspricht, wobei der zweite Anschlagsabschnitt (28-2), vorzugsweise senkrecht, aus der Oberseite (34) des Basiselements (14) vorsteht und wobei der zweite Halteabschnitt (30-2) parallel zur Oberseite (34) des Basiselements (14) orientiert ist; ein erstes Stützelement (20-1); und mindestens ein zweites Stützelement (20-2, 20-3, 20-4); wobei die Klemmschenkel (16) eine T-förmige Aufnahmenut (38) für das Tragprofil (62) zwischen den Halteabschnitten (30), den Anschlagsabschnitten (28) und der Oberseite (34) des Basiselements (14) definieren, wobei sich die Halteabschnitte (30), vorzugsweise auf gleicher Höhe, mit einer lichten Breite (B1) gegenüberliegen, die kleiner als die Breite (B2) des Tragprofils (62) ist, und wobei ein Abstand (A1) zwischen den Anschlagsabschnitten (28-1, 28-2) größer als die Breite (B2) des Tragprofils (62) ist; wobei jedes Stützelement (20) mit jeweils einer Höhe (H3) aus der Oberseite (34) des Basiselements (14) hervorsteht, so dass die Stützelemente (20) gemeinsam eine Auflageebene (40) für die Unterseite (64) des Tragprofils (62) definieren, die parallel zu den Halteabschnitten (30) orientiert ist; und wobei zumindest eines der Stützelemente (20-2) außerhalb der Schattenräume (42) in einem Zwischenbereich (26) der Oberseite (34) des Basiselements (14) angeordnet ist, der zwischen dem ersten und zweiten Schattenraum (42-1, 42-2) liegt (Fig. 4).

## Beschreibung

Die vorliegende Erfindung betrifft einen Klemmhalter für ein schienenartiges Tragprofil, das eine ebene Unterseite aufweist, um ein Photovoltaik-(PV-)Modul auf einem Dach zu befestigen. Die Erfindung betrifft ferner ein Klemmhaltersystem mit einem Tragprofil und mit einem erfindungsgemäßen Klemmhalter sowie optional mit einem Höhenadapter.

Das deutsche Gebrauchsmuster DE 20 2009 001 810 U1 offenbart ein Solarmodulbefestigungssystem mit einer U-förmigen Halteklammer, in welche ein Tragprofil in einem angekippten Zustand eingeführt und durch eine einfache lineare Schubbewegung gesichert werden kann. Die Halteklammer weist zwei sich gegenüberliegende Nuten auf, die unterschiedlich geformt sind und unterschiedliche Höhen aufweisen. Eingangsbereiche der Nuten weisen eine identische Höhe auf, die im Wesentlichen einer Stärke des Tragprofils entsprechen, so dass das Profil beim Montieren in der Halteklammer sehr genau und mit großer Sorgfalt positioniert werden muss.

Es ist daher eine Aufgabe der Erfindung, einen Klemmhalter und ein Klemmhaltersystems bereitzustellen, das die oben erwähnten Nachteile überwindet.

Diese Aufgabe wird durch einen Klemmhalter für eine schienenartiges Tragprofil gelöst, das eine ebene Unterseite mit einer Breite aufweist und an welchem ein PV-Modul auf einem Dach befestigt wird, aufweisend ein Basiselement mit einer Oberseite und einer Unterseite, einen ersten Klemmschenkel, der einen ersten Anschlagsabschnitt und einen ersten überhängenden Halteabschnitt aufweist, wobei der erste Anschlagsabschnitt und der erste Halteabschnitt eine erste Klemmnut definieren, die einem ersten Schattenraum unterhalb des ersten überhängenden Halteabschnitts entspricht, wobei der erste Anschlagsabschnitt, vorzugsweise senkrecht, aus der Oberseite des Basiselements vorsteht und wobei der erste Halteabschnitt parallel zur Oberseite des Basiselements orientiert ist, einen zweiten Klemmschenkel, der einen zweiten Anschlagsabschnitt und einen zweiten überhängenden Halteabschnitt aufweist, wobei der zweite Anschlagsabschnitt und der zweite Halteabschnitt eine zweite Klemmnut definieren, die einem zweiten Schattenraum unterhalb des zweiten überhängenden Halteabschnitts entspricht, wobei der zweite Anschlagsabschnitt, vorzugsweise senkrecht, aus der Oberseite des Basiselements vorsteht und wobei der zweite Halteabschnitt parallel zur Oberseite des Basiselements orientiert ist, ein erstes Stützelement, und mindestens ein zweites Stützelement, wobei die Klemmschenkel eine T-förmige Aufnahmenut für das Tragprofil zwischen den Halteabschnitten, den Anschlagsabschnitten und der Oberseite des Basiselements definieren, wobei sich die Halteabschnitten, vorzugsweise auf gleicher Höhe, mit einer lichten Breite gegenüberliegen, die kleiner als die Breite des Tragprofils ist, und wobei ein Abstand zwischen den Anschlagsabschnitten größer als die Breite des Tragprofils ist, wobei jedes Stützelement mit jeweils einer Höhe aus der Oberseite des Basiselements hervorsteht, so dass die Stützelemente gemeinsam eine Auflageebene für die Unterseite des Tragprofils definieren, die parallel zu den Halteabschnitten orientiert ist, wobei zumindest eines der Stützelemente außerhalb der Schattenräume in einem Zwischenbereich der Oberseite des Basiselements angeordnet ist, der zwischen dem ersten und zweiten Schattenraum liegt.

Der Klemmhalter der Erfindung ist einfach aufgebaut. Tragprofile können durch schräges Einführen und anschließendes Verkippen mit nachfolgendem Zurückziehen auf einfache Art und Weise im Klemmhalter montiert werden. Der Klemmhalter kann durch Strangpressen hergestellt werden. Der Klemmhalter lässt sich einfach auf dem Dach montieren, z.B. durch Verschrauben.

Bei einer bevorzugten Ausführungsform sind der erste Klemmschenkel und der zweite Klemmschenkel gleich stark ausgebildet.

Durch die gleich starke Ausbildung der Klemmschenkel sind die Klemmnuten gleich hoch. Durch Variation der Stärke der Klemmschenkel können Tragprofile mit unterschiedlich ausgebildeten Randbereichen verwendet werden.

Vorzugsweise ist jedes Stützelement als Rippe oder Steg ausgebildet. Jede Rippe bzw. jeder Steg ist vorzugsweise einstückig mit dem Basiselement ausgebildet und erstreckt sich quer zur lichten Breite.

Ferner ist es von Vorteil, wenn das Basiselement seitlich äußere Befestigungsabschnitte aufweist.

Die seitlichen äußeren Befestigungsabschnitte dienen der Befestigung des Klemmhalters am Dach.

Bei einer weiteren bevorzugten Ausführungsform ist das Basiselement plattenförmig ausgebildet, wobei die Oberseite und die Unterseite des Basiselements im Wesentlichen parallel zueinander orientiert sind.

Wenn das Basiselement plattenförmig ausgebildet ist, lässt es sich gut auf dem Dach montieren. Durch die parallele Orientierung der Ober- und Unterseite des Basiselements liegen die Tragprofile plan auf dem Dach auf.

Bei einer weiteren besonderen Ausgestaltung liegen alle Stützelemente außerhalb der Schattenräume im Zwischenbereich der Oberseite des Basiselements auf.

In diesem Fall kann das Tragprofil sowohl in die erste Klemmnut als auch in die zweite Klemmnut zuerst (durch Schrägstellung und Verkippung) eingeführt werden. Der Klemmhalter muss während der Montage auf dem Dach nicht besonders ausgerichtet werden. Bei der Montage ist es egal, welche Klemmnut "oben" und welche Klemmnut "unten" ist.

Ferner ist es von Vorteil, wenn die Klemmschenkel, die Stützelemente und das Basiselement symmetrisch zueinander angeordnet und ausgebildet sind.

Hier kommen die gleichen Vorteile wie oben zum Tragen. Durch die symmetrische Ausbildung vereinfacht sich das Werkzeug, mit dem der Klemmhalter, z.B. durch Strangpressen, hergestellt wird.

Bei einer weiteren Ausgestaltung sind die Höhen der Stützelemente alle identisch.

Identisch hohe Stützelemente eignen sich besonders gut zur Verwendung mit Tragprofilen, deren Unterseiten eine einheitlich ebene Fläche ist.

Gemäß einem weiteren Aspekt wird ein Klemmhaltersystem mit einem Tragprofil und mit einem erfindungsgemäßen Klemmhalter vorgeschlagen.

Bei einer weiteren Ausführungsform ist ferner ein Höhenadapter vorgesehen, der eine Oberseite und eine Unterseite aufweist, wobei die Unterseite Vertiefungen aufweist, die so ausgebildet und angeordnet sind, dass die Vertiefungen zumindest die Stützelemente, vorzugsweise formschlüssig, aufnehmen, die im Zwischenbereich der Oberseite des Basiselements angeordnet sind, wobei die Auflageebene durch die Oberseite des Höhenadapters definiert ist.

Durch den Höhenadapter kann ein baukastenartiges System gebildet werden, bei dem unterschiedlich starke Tragprofile eingesetzt werden können. Die Tragprofile können unterschiedliche Dicken im Bereich ihrer Klemmabschnitte aufweisen. Die Klemmabschnitte wechselwirken mit den Klemmnuten des Klemmhalters. Des Weiteren können Unregelmäßigkeiten ausgeglichen werden, die auf unterschiedlich dicke Tragprofile (Fertigungsgenauigkeit) zurückgehen.

Ferner ist es bevorzugt, wenn der Höhenadapter eine Breite aufweist, die kleiner als die lichte Breite ist.

Wenn der Höhenadapter schmaler als die Aufnahmenut ist, kann er einfach von oben durch die Nut eingeführt und auf die Stützelemente aufgesteckt werden. Die Montage ist also sehr einfach.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig.1: verschiedene Ansichten eines Klemmhalters gemäß der Erfindung;
- Fig. 2: eine vergrößerte Seitenansicht des Klemmhalters der Fig. 1;
- Fig. 3: einen Montagevorgang, bei dem ein Tragprofil in den Klemmhalter der Fig. 1 eingeführt und im Klemmhalter gesichert wird; und
- Fig. 4: eine geschnittene Seitenansicht eines abgewandelten Klemmhalters gemäß der Erfindung inklusive einem Höhenadapter.

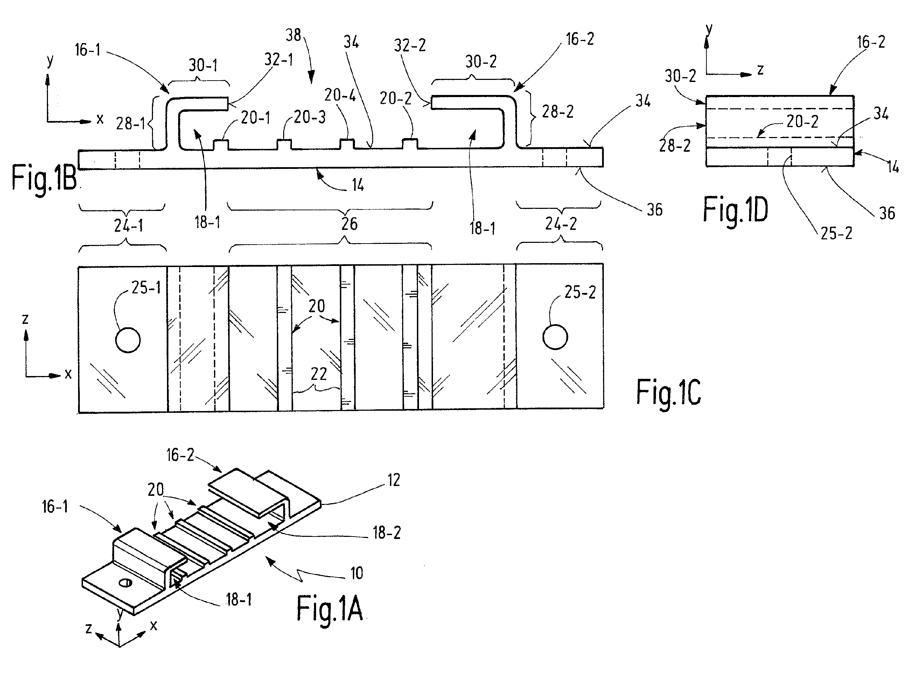

In Fig. 1 sind verschiedene Ansichten einer ersten Ausführungsform eines Klemmhalters 10 gemäß der vorliegenden Erfindung gezeigt. Fig. 1A zeigt eine perspektivische Ansicht. Fig. 1B zeigt eine Seitenansicht. Fig. 1C zeigt eine Draufsicht. Fig. 1D zeigt eine weitere Seitenansicht. Nachfolgend wird unter Bezugnahme auf alle Ansichten der Fig. 1A bis 1D der Klemmhalter 10 der Fig. 1 beschrieben werden.

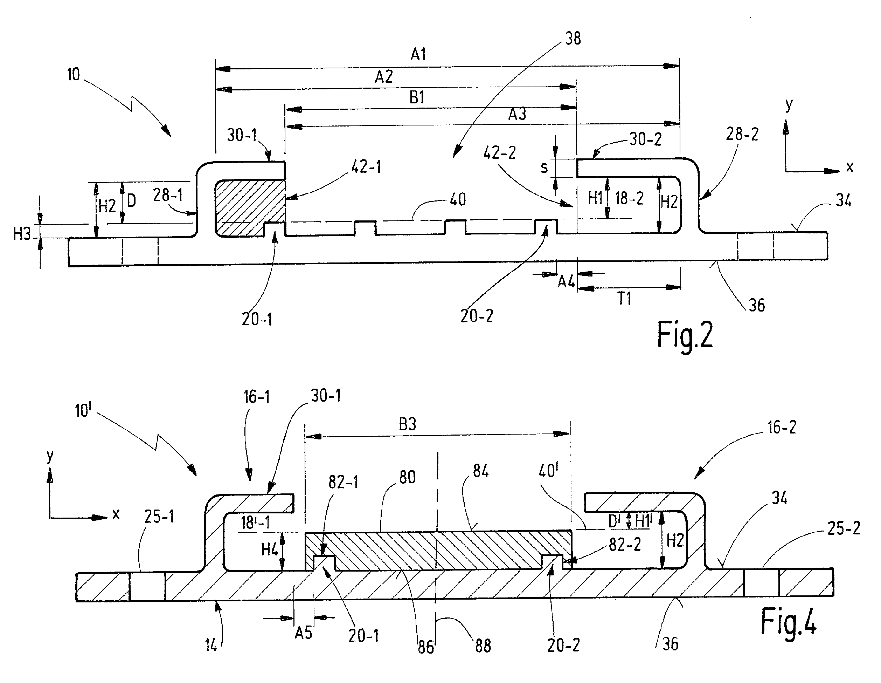

Der Klemmhalter 10 weist einen, vorzugsweise einstückig ausgebildeten, Körper 12 auf. Der Körper 12 kann zum Beispiel extrudiert (Kunststoff) oder durch Strangpressen (Metall) hergestellt werden. Der Körper 12 weist ein Basiselement 14, einen ersten Klemmschenkel 16-1 und einen zweiten Klemmschenkel 16-2 auf. Die Klemmschenkel 16 definieren jeweils eine Klemmnut 18. Zwischen den Klemmschenkeln 16 sind Stützelemente 20, zum Beispiel in Form von quer (Z-Richtung) verlaufenden Rippen 22, vorgesehen, die auf dem Basiselement 14 angeordnet sind. Im Beispiel der Fig. 1 sind vier Stützelemente 20-1 bis 20-4 gezeigt. Ein erstes Stützelement 20-1 ist im Bereich des ersten Klemmschenkels 16-1 angeordnet. Zumindest ein zweites Stützelement 20-2 ist im Bereich des zweiten Klemmschenkels 16-2 angeordnet. Im Beispiel der Fig. 1B ist ein drittes Stützelement 20-3 und ein viertes Stützelement 20-4 zwischen dem ersten und zweiten Stützelement 20-1 und 20-2 angeordnet. Die Stützelemente 20 sind vorzugsweise annähernd gleich (in der X-Richtung) zueinander beabstandet, um eine gleichmäßige Ballastierung zu erzielen. Es versteht sich, dass die in der Fig. 1 rippen- bzw. stegähnlichen Stützelemente 20 geometrisch auch anders geformt sein können, z.B. in Form von (hier nicht dargestellten) Auflagepunkten. Die Stützelemente 20 weisen vorzugsweise eine identische Höhe auf, wie es nachfolgend unter Bezugnahme auf Fig. 2 noch näher erläutert werden wird.

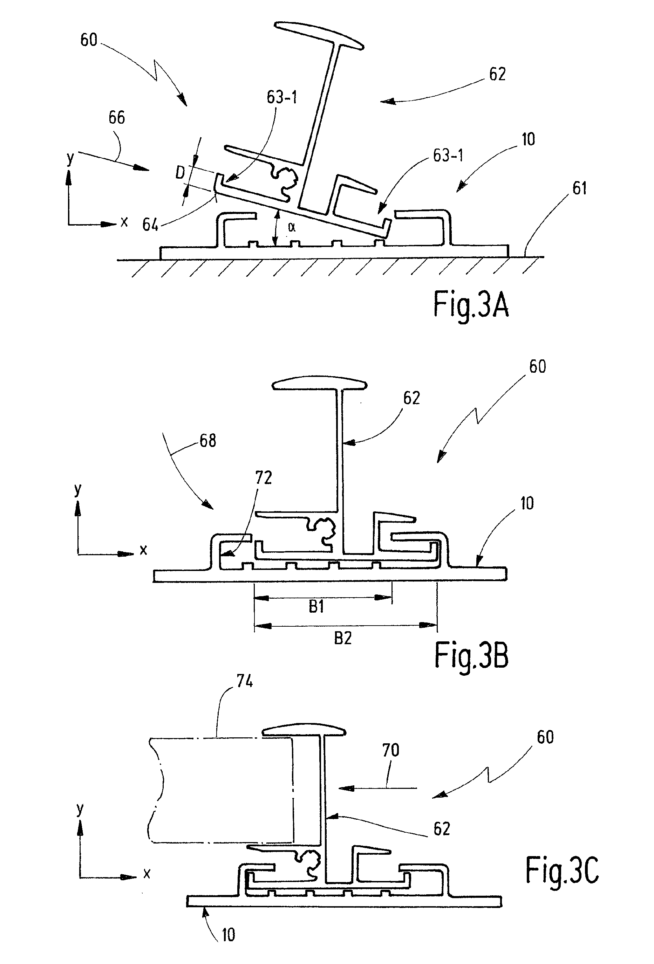

Das Basiselement 14 ist vorzugsweise plattenförmig bzw. quaderförmig ausgebildet und kann an seinen äußeren Rändern Befestigungsabschnitte 24 aufweisen, um den Klemmhalter 10 auf einem Dach 61 zu montieren, wie es nachfolgend unter Bezugnahme auf Fig. 3 noch näher beschrieben werden wird. Die Befestigungsabschnitte 24-1 und 24-2 können ein oder mehrere Öffnungen 25-1 bzw. 25-2 aufweisen, um zum Beispiel Schrauben oder Ähnliches aufzunehmen, mit denen der Klemmhalter 10 am Dach befestigt wird.

Der erste Klemmschenkel 16-1 weist einen ersten Anschlagsabschnitt 28-1 und einen ersten Halteabschnitt 30-1 auf. Der zweite Klemmschenkel 16-2 weist einen zweiten Anschlagsabschnitt 28-2 und einen zweiten Halteabschnitt 30-2 auf. Die Anschlagsabschnitte 28 sind vorzugsweise einstückig mit ihren entsprechenden Halteabschnitten 30 ausgebildet. Die Anschlagsabschnitte 28 schließen vorzugsweise einen rechten Winkel sowohl mit einer Oberseite 34 des Basiselements 14 als auch dem zugehörigen Halteabschnitt 30 ein. Die Unterseite des Basiselements 14 ist mit 36 bezeichnet. Die Anschlagsabschnitte 28-1 und 28-2 sind vorzugsweise gleich hoch, wie es nachfolgend noch unter Bezugnahme auf Fig. 2 genauer erläutert werden wird. Der erste Halteabschnitt 30-1 ist (in X-Richtung) kürzer als der zweite Halteabschnitt 30-2. Sich gegenüberliegende Stirnseiten 32 der Halteabschnitte 30-1 und 30-2 sind mit 32-1 und 32-2 bezeichnet. Ein Abstand zwischen den Stirnseiten 32-1 und 32-2 wird nachfolgend auch als lichte Breite B1 bezeichnet werden (vgl. auch Fig. 2).

Die Klemmschenkel 16-1 und 16-2 weisen vorzugsweise eine identische Stärke S auf. Die Halteabschnitte 30 können auch gleich lang ausgebildet sein.

Die Oberseite 34 und die Unterseite 36 sind vorzugsweise parallel zueinander orientiert, so dass die Stützelemente 20 aus der Oberseite 34 im Wesentlichen senkrecht vorstehen. Nicht näher bezeichnete Oberseiten der Stützelemente 20 können ebenfalls parallel zur Oberseite 34 des Basiselements 14 und/oder parallel zu einer Unterseite von, vorzugsweise auf gleicher Höhe angeordneten, Unterseiten der Halteabschnitte 30 orientiert sein. Ein Zwischenbereich, der zwischen den Projektionen der Stirnseiten 32 (in Y-Richtung) auf die Oberseite 34 des Basiselements 14 liegt, ist mit 26 bezeichnet.

In Fig. 2 ist eine vergrößerte Seitenansicht gemäß der Fig. 1B gezeigt. Die Stützelemente 20-1 bis 20-4 weisen zum Beispiel einen rechtwinkligen Querschnitt auf und definieren mit ihren jeweiligen Oberseiten gemeinsam eine (plane) Auflageebene 40 für ein Tragprofil 62, wie es nachfolgend unter Bezugnahme auf Fig. 3 noch näher erläutert werden wird. Die Auflageebene 40 ist vorzugsweise parallel zur Oberseite 34 orientiert. Die Auflageebene 40 ist parallel zu den nicht näher bezeichneten Unterseiten der Halteabschnitte 30-1 und 30-2 orientiert, die jeweils eine Stärke S aufweisen, zum Beispiel 2,6 mm. Unterhalb der Halteabschnitte 30-1 und 30-2 liegt jeweils ein Schattenraum 42-1 bzw. 42-2. Der Schattenraum 42-1 ist zur Verdeutlichung schraffiert dargestellt und entspricht der Klemmnut 18-1. Der Schattenraum 42-2 ist lediglich in Form seiner durch einen Strich dargestellten Stirnseite angedeutet. Die Schattenräume 42 entsprechen einem Raum, der von dem zugehörigen Halteabschnitt 30, dem Anschlagabschnitt 28 und einem Teil der Oberseite 34 umgeben wird. Die Schattenräume 42 sind einseitig in der X-Richtung offen, um das Tragprofil 62 aufzunehmen. Innerhalb des ersten Schattenraums 42-1 ist das erste Stützelement 20-1 angeordnet. Das erste Stützelement 20-1 kann auch außerhalb des Schattenraums 42-1 liegen, wie es exemplarisch für den zweiten Schattenraum 42-2 in Bezug auf das zweite Stützelement 20-2 in Fig. 2 gezeigt ist. Wenn ein Stützelement 20 außerhalb des Schattenraums 42 liegt, dann liegt das Stützelement 20 vollständig außerhalb des entsprechenden Schattenraums 42. Es kommt zu keinen Überschneidungen zwischen dem Schattenraum 42 und dem jeweiligen Stützelement 20.

Eine Höhe H1 zwischen der Auflageebene 40 und den Unterseiten der Halteabschnitte 30-1 und 30-2 beträgt zum Beispiel 6,2 mm. Die (effektive) Höhe H1 der Aufnahmenuten 18 liegt in der Größenordnung einer Dicke D des Tragprofils 62. Eine Gesamthöhe H2 der Schattenräume 42 beträgt zum Beispiel 8,2 mm. Eine Höhe H3 der Stützelemente 20 beträgt zum Beispiel 2 mm, wobei die Stützelemente einen Abstand von 10 mm zueinander haben können.

Eine lichte Breite B1 einer im Wesentlichen T-förmig ausgebildeten Aufnahmenut 38 beträgt zum Beispiel 42 mm. Ein Abstand A1 zwischen Innenseiten 72 (Fig. 3B) der Anschlagsabschnitte 28-1 und 28-2 beträgt zum Beispiel 66,8 mm. Eine Tiefe T1 (X-Richtung) des zweiten Schattenraums 42-2 bzw. der zweiten Klemmnut 18-2 beträgt zum Beispiel 14,8 mm, wobei das zweite Stützelement 20-2 einen Abstand A4 zur Stirnseite 32-2 aufweist.

Ein Abstand A2 von der Innenseite 72 der ersten Klemmnut 18-1 bzw. des ersten Anschlagsabschnitts 28-1 zur Stirnseite 32-2 des zweiten Halteabschnitts 30-2 beträgt zum Beispiel 52 mm. Ein Abstand A3 zwischen der Stirnseite 32-1 des ersten Halteabschnitts 30-1 und einer Innenseite des zweiten Anschlagsabschnitts 28-2 beträgt zum Beispiel 56,8 mm. Daraus ergibt sich, dass der zweite Halteabschnitt 30-2 leicht länger als der erste Halteabschnitt 30-1 ist. Die Halteabschnitte 30-1 und 30-2 können aber gleich lang gewählt werden, sollte es gewünscht sein. In diesem Fall wäre der Klemmhalter 10 symmetrisch ausgebildet.

Bezugnehmend auf die Fig. 3A bis 3C wird nachfolgend ein Montagevorgang näher beschrieben werden. Die Fig. 3A bis 3C zeigen jeweils eine Seitenansicht. Der Klemmhalter 10 kann auf einem Dach 61 oder einem anderen Gegenstand befestigt werden.

Das Halteprofil 62 weist zwei seitliche Klemmabschnitte 63-1 und 63-2 auf. Die Klemmabschnitte 63-1 und 63-2 können senkrecht relativ zur Unterseite 64 des Tragprofils 62 vorstehende Abschnitte aufweisen, so dass eine hier nicht näher bezeichnete Basis des Trageprofils 62 eine Dicke D aufweist, die in der Größenordnung der Höhe H1 (vgl. Fig. 2) liegt. Das Tragprofil 62 wird mit einem Winkel α schräg in den Klemmhalter der Fig. 1 eingeführt, wie es durch einen Pfeil 66 angedeutet ist (Fig. 3A).

In einem nächsten Schritt wird das Tragprofil 62 in die zweite Klemmnut 18-2 verschwenkt, wie es durch einen Pfeil 68 in der Fig. 3B angedeutet ist. In der Fig. 3B erkennt man deutlich, dass die lichte Breite B1 der Aufnahmenut 38 deutlich kleiner als eine Breite B2 der Unterseite 64 des Tragprofils 62 ist.

Sobald der Zustand der Fig. 3B erreicht ist, kann das Tragprofil 62 in die erste Klemmnut 18-1 bewegt werden, wie es durch einen Pfeil 71 in der Fig. 3C angedeutet ist. In diesem Zustand stößt der erste Klemmabschnitt 63-1 an eine Innenseite 72 des Anschlagsabschnitts 28-1 der ersten Klemmnut 18-1 an. Die Fig. 3C zeigt das Tragprofil 62 in einem endmontierten Zustand innerhalb des Klemmhalters 10. Mit einer strichpunktierten Linie ist ein Photovoltaikmodul 74 angedeutet. Man erkennt, dass die Klemmabschnitte 63-1 und 63-2 des Tragprofils 62 beide in ihren zugehörigen Klemmnuten 18-1 und 18-2 sitzen. Das Tragprofil 62 kann nicht in der Y-Richtung ausgehoben werden (z.B. durch Wind).

Bezugnehmend auf Fig. 4 ist eine geschnittene Seitenansicht eines im Vergleich zur Fig. 1 abgewandelten Klemmhalters 10' gezeigt.

Der Klemmhalter 10' baut nahezu gleich zum Klemmhalter 10 der Fig. 1 mit Ausnahme der Anzahl und Anordnung der Stützelemente 20. Der Klemmhalter 10' der Fig. 4 weist exemplarisch nur zwei Stützelemente 20-1 und 20-2 auf. Der Klemmhalter 10' zeichnet sich dadurch aus, dass die Stützelemente 20-1 und 20-2 alle außerhalb der Klemmnuten 18 im Zwischenbereich 26 liegen. Das erste Stützelemente 20-1 ist zum Beispiel mit einem Abstand A5 zur Stirnseite der ersten Klemmnut 18-1 beabstandet.

Des Weiteren ist in der Fig. 4 ein Höhenadapter 80 gezeigt. Der Höhenadapter 80 weist an seiner Unterseite 86 Vertiefungen 82 auf, um die Stützelemente 20 aufzunehmen. Die Vertiefungen 82 sind so angeordnet, dass sie mit den Stützelementen 20 korrespondieren. Die Vertiefungen 82 können so ausgebildet sein, dass sie die Stützelemente 20 formschlüssig aufnehmen.

Eine Oberseite 84 des Höhenadapters 80 definiert eine Auflageebene 40', die höher als die Auflageebene 40 der Fig. 2 liegt. Die Auflageebene 40' liegt in Bezug auf die Oberseite 34 des Basiselements 14 auf einer Höhe H4, so dass sich eine Höhe H1' entsprechend reduziert (H2 = H1' + H4). Die Höhe H1' ist durch eine Dicke D' des hier nicht gezeigten Tragprofils 62 bedingt.

Der Höhenadapter 80 ist vorzugsweise symmetrisch ausgebildet (vgl. Symmetrie- bzw. Spiegelachse 88).

Der Höhenadapter 80 ist Teil eines modularen Baukastensystems, das aus einer Vielzahl von Halteprofilen 62 mit unterschiedlichen Dicken D und einem Klemmhalter 10 mit einheitlicher Höhe H2 besteht.

## Patentansprüche

1. Klemmhalter (10) für eine schienenartiges Tragprofil (62), das eine ebene Unterseite (64) mit einer Breite (B2) aufweist und an welchem ein PV-Modul (74) auf einem Dach (61) befestigt wird, aufweisend:
einen Basiselement (14) mit einer Oberseite (34) und einer Unterseite (36);
einen ersten Klemmschenkel (16-1), der einen ersten Anschlagsabschnitt (28-1) und einen ersten überhängenden Halteabschnitt (30-1) aufweist, wobei der erste Anschlagsabschnitt (28-1) und der erste Halteabschnitt (30-1) eine erste Klemmnut (18-1) definieren, die einem ersten Schattenraum (42-1) unterhalb des ersten überhängenden Halteabschnitts (30-1) entspricht, wobei der erste Anschlagsabschnitt (28-1), vorzugsweise senkrecht, aus der Oberseite (34) des Basiselements (14) vorsteht und wobei der erste Halteabschnitt (30-1) parallel zur Oberseite (34) des Basiselements (14) orientiert ist;
einen zweiten Klemmschenkel (16-2), der einen zweiten Anschlagsabschnitt (28-2) und einen zweiten überhängenden Halteabschnitt (30-2) aufweist, wobei der zweite Anschlagsabschnitt (28-2) und der zweite Halteabschnitt (30-2) eine zweite Klemmnut (18-2) definieren, die einem zweiten Schattenraum (42-2) unterhalb des zweiten überhängenden Halteabschnitts (30-2) entspricht, wobei der zweite Anschlagsabschnitt (28-2), vorzugsweise senkrecht, aus der Oberseite (34) des Basiselements (14) vorsteht und wobei der zweite Halteabschnitt (30-2) parallel zur Oberseite (34) des Basiselements (14) orientiert ist;
ein erstes Stützelement (20-1); und
mindestens ein zweites Stützelement (20-2, 20-3, 20-4);
wobei die Klemmschenkel (16) eine T-förmige Aufnahmenut (38) für das Tragprofil (62) zwischen den Halteabschnitten (30), den Anschlagsabschnitten (28) und der Oberseite (34) des Basiselements (14) definieren, wobei sich die Halteabschnitten (30), vorzugsweise auf gleicher Höhe, mit einer lichten Breite (B1) gegenüberliegen, die kleiner als die Breite (B2) des Tragprofils (62) ist, und wobei ein Abstand (A1) zwischen den Anschlagsabschnitten (28-1, 28-2) größer als die Breite (B2) des Tragprofils (62) ist;
wobei jedes Stützelement (20) mit jeweils einer Höhe (H3) aus der Oberseite (34) des Basiselements (14) hervorsteht, so dass die Stützelemente (20) gemeinsam eine Auflageebene (40) für die Unterseite (64) des Tragprofils (62) definieren, die parallel zu den Halteabschnitten (30) orientiert ist; und
wobei zumindest eines der Stützelemente (20-2) außerhalb der Schattenräume (42) in einem Zwischenbereich (26) der Oberseite (34) des Basiselements (14) angeordnet ist, der zwischen dem ersten und zweiten Schattenraum (42-1, 42-2) liegt.

2. Klemmhalter (10) nach Anspruch 1, wobei der erste Klemmschenkel (16-1) und der zweite Klemmschenkel (16-2) gleich stark (S) ausgebildet sind.

3. Klemmhalter (10) nach Anspruch 1 oder 2, wobei jedes Stützelement (20) als Rippe (22) oder Steg ausgebildet ist, die bzw. der vorzugsweise einstückig mit dem Basiselement (14) ausgebildet ist und die bzw. der sich im Wesentlichen quer zur lichten Breite (B1) erstreckt.

4. Klemmhalter (10) nach einem der Ansprüche 1 bis 3, wobei das Basiselement (14) seitlich äußere Befestigungsabschnitte (24) aufweist.

5. Klemmhalter (10) nach einem der Ansprüche 1 bis 4, wobei das Basiselement (14) plattenförmig ausgebildet ist und wobei die Oberseite (34) und die Unterseite (36) des Basiselements (14) im Wesentlichen parallel zueinander orientiert sind.

6. Klemmhalter (10') nach einem der Ansprüche 1 bis 5, wobei alle Stützelemente (20) außerhalb der Schattenräume (42) im Zwischenbereich (26) liegen.

7. Klemmhalter (10) nach einem der Ansprüche 1 bis 6, wobei die Klemmschenkel (16), die Stützelemente (20) und das Basiselement (14) symmetrisch zueinander angeordnet und ausgebildet sind.

8. Klemmhalter (10) nach einem der Ansprüche 1 bis 7, wobei die Höhen (3) der Stützelemente (20) alle identisch sind.

9. Klemmhaltersystem (60) mit einem Tragprofil (62) und einem Klemmhalter (10; 10') nach einem der Ansprüche 1 bis 8.

10. Klemmhaltersystem (60) nach Anspruch 9, das ferner einen Höhenadapter (80) aufweist, der eine Oberseite (84) und eine Unterseite (86) aufweist, wobei die Unterseite (86) Vertiefungen (82) aufweist, die so ausgebildet und angeordnet sind, dass die Vertiefungen (82) zumindest die Stützelemente (20), vorzugsweise formschlüssig, aufnehmen, die im Zwischenbereich (26) der Oberseite (34) des Basiselements (14) angeordnet sind, wobei die Auflageebene (40') durch die Oberseite (84) des Höhenadapters (80) definiert ist.

11. Klemmhaltersystem (60) nach Anspruch 10, wobei der Höhenadapter (80) eine Breite (B3) aufweist, die kleiner als die lichte Breite (B1) ist.
